# EUROPEAN PATENT APPLICATION

(11) **EP 2 075 986 A1**
(43) Date of publication of application: **01.07.2009**
(21) Application number: 07150495.5
(22) Date of filing: 31.12.2007
(51) Int. Cl.: H04L 29/08

(54) **Enhanced presence server system**

(71) Applicant: Nokia Siemens Networks Oy, 02610 Espoo (FI)
(72) Inventor: Dostal, Pavel, 79828, Morice (CZ); Laurila, Antti, 00660, Helsinki (FI)
(74) Representative: Äkräs, Tapio Juhani

(57) **Abstract**

Presence information of users of the communication system comprises a data element that is associated with a condition such that availability of information in the data element of the user to another user of the communication system depends on the condition, and the condition is based on information in the data element of the other user. Accuracy of the provided information in terms of dynamic validity of the provided information is improved.

## Description

### FIELD OF THE INVENTION

The present invention relates to communications and especially a method, a communication system and a network node for collecting and distributing presence information

### BACKGROUND OF THE INVENTION

Open Mobile Alliance (OMA) has defined a presence SIMPLE (Session Initiation Protocol for instant messaging and presence leveraging extensions) enabler, which is a service that manages the collection and controlled dissemination of presence information. The presence SIMPLE enabler uses protocols and formats for presence information defined in IETF (The Internet Engineering Task Force) and extends them to fulfill other presence features.

Presence information is provided by a user entity of the communication network called the presentity. User entities receiving the presence information are called watchers. The authorization of access to presence information of a presentity is done using presence authorization rules. Each presentity can define who is allowed to access presence information provided by the presentity and also can define restrictions on which part of presence information can be accessed by watcher.

The restrictions are essential for the service, because users of the communication network are becoming more and more security conscious and wish to control carefully the information they reveal of them. On the other hand, for the implementation of useful applications and use cases, certain level of information that is typically considered private would be needed.

For the time being some basic control mechanisms have been determined, but for several practical implementations they are too rigid. In some use cases certain presence information may be useful only if some kind of match exists between the status of the watcher and the presentity or some predefined information provided by the presentity.

For example, let us assume a presentity has provided access to his presence information to a group of users, defined as a group 'friends'. However, the presentity does not wish to share his location information with the whole group, so in the present system he may exclude location information from the presence information available to group 'friends'.

However, when located in a particular area, for example in an airport or an office building in a particular city, it would be valuable to be able to check whether any of the users in the group 'friends' would happen to presently co-locate in the same place. Since location information is categorically restricted from the group 'friends', this is not possible.

According to the present specifications, the watcher may define a filter such that he will receive location information on a user only if the location of the presentity is the same as the location of the watcher. This does not anyhow alleviate the situation in the present use case, because the presentity cannot control the filter used by the watcher, and the watcher must have full access to the location information of the presentity. Such use of filters is also very inefficient because the watcher needs to update the filter every time his location changes.

### SUMMARY OF THE INVENTION

It is thus an object of the present invention to provide a method and an apparatus for implementing the method so as to enhance the operation of a presence server system without compromising the control of privacy by the presentity. The objects of the invention are achieved by a method, a communication system, a network node and a computer program product, which are characterized by what is stated in the independent claims. The preferred embodiments of the invention are disclosed in the dependent claims.

The invention is based on the idea of enabling conditional authorization to at least part of the presence information of a presentity such that the availability of the information depends also on an attribute in the presence information of the watcher. The part of the presence information is provided to the watcher only if the attribute in the presence information matches with a criterion associated with the condition for the access.

An advantage of the method and arrangement of the invention is that the information may be provided with more variety, which means that the accuracy of the provided information in terms of, for example dynamic validity of the provided information is improved. This may be achieved, however, without reducing the privacy of the users of the system. The proposed solution improves the operability of the system as well as user experience associated to the service provided by the system.

### BRIEF DESCRIPTION OF THE DRAWINGS

In the following the invention will be described in greater detail by means of preferred embodiments with reference to the attached [accompanying] drawings, in which
Figure 1 illustrates a communication system;
Figure 2 illustrates an embodiment for a server system and associated user equipment;
Figure 3 illustrates in more detail an exemplary procedure from the point of view of the presence server;
Figure 4 illustrates an exemplary hardware configuration for the implementation of an embodied device.

### DETAILED DESCRIPTION OF THE INVENTION

It is appreciated that the following embodiments are exemplary. Furthermore, although the specification may in various places refer to "an", "one", or "some" embodiment(s), reference is not necessarily made to the same embodiment(s), or the feature in question does not only apply to a single embodiment. Single features of different embodiments may be combined to provide further embodiments.

The invention is applicable to any communications system capable of managing collection and controlled dissemination of presence information over communication networks. In the following, the present invention will be described by means of OMA service enables, including the OMA presence service accessed with a Push-to-talk over Cellular (PoC) media communication service in a third generation mobile communication system, without limiting the invention to this specific implementation environment or terms used in the description of the embodiment.

The Open Mobile Alliance (OMA) is a standards body that develops open standards for the communications industry. The OMA restricts itself to the standardization of applicative protocols and presumes the existence of a networking technology specified by outside parties. OMA specifications are agnostic of the particular cellular network technologies used to provide networking and actual data transport. For example, OMA specifications for a given function are the same with GSM, UMTS or CDMA2000 networks.

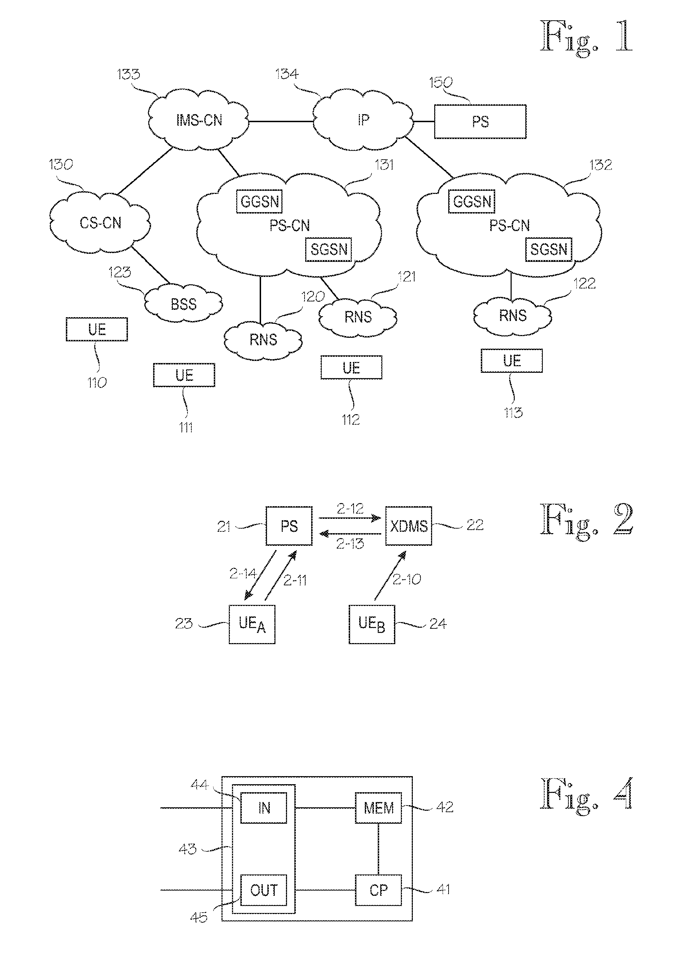

As illustrated in Figure 1, in the third generation (3G) mobile communications systems, a public land mobile network (PLMN) infrastructure may be logically divided into core network (CN) 130, 131, 132, 133, 134 and access network (AN) infrastructures 120, 121, 122, 123. The access network AN refers to an infrastructure of points or nodes interconnected by communication paths. AN enables transmission of signals between users and the core network. Examples of access networks comprise base station subsystem (BSS) 123 for GSM, and radio network subsystem (RNS) or a radio access network (RAN) 120, 121, 122 for UMTS.

In the technical specifications of a third generation partnership project (3GPP), the core network CN is logically divided into a circuit switched (CS) domain 130, a packet switched (PS) domain 131, 132 and an IP multimedia subsystem (IMS) 133. The CS domain refers to a set of all CN entities offering a circuit switched type of connection for user traffic, as well as all the entities supporting the related signalling. A circuit switched type of connection is a connection for which dedicated network resources are allocated upon connection establishment and released upon connection release. A packet switched type of connection transports user information in packets so that each packet can be routed independently of a previous one. Examples of the PS domain include GPRS (General Packet Radio Service), and typical entities include a serving GPRS support node (SGSN) and a gateway GPRS support node (GGSN). The IP multimedia subsystem comprises CN elements for provision of multimedia services. The IP multimedia subsystem IMS 133 utilizes the PS domain to transport multimedia signalling and bearer traffic.

A server system 150 for provision of PoC or any other type of service enablers may be provided on top of the Packet Switched (PS) core network. The Packet Switched (PS) core network 131, 132, 133 of Figure 1 provides packet mode (e.g. IP) communication services to User Equipment (UE) 110, 111, 112, 113. UE accessing the PS CN, and the PS core network itself, utilizes the services provided by a Radio network subsystem (RNS) or Radio access network (RAN) 120, 121, 122, 123 to provide packet-mode communication between the UE and a PS CN subsystem. The multiple access method employed in an air interface in the RAN may be Time Division Multiple Access (TDMA), Frequency Division Multiple Access (FDMA), Code Division Multiple Access (CDMA), or any combination thereof.

Figure 2 illustrates an embodiment for a server system and associated user equipment. In view of the description of Figure 1 a man skilled in the art is able to understand the interconnectivity of the elements of Figure 2. The description thus concentrates to the roles and function of the elements in implementing the embodied operations.

OMA SIMPLE Presence defines a system whose role is to collect and disseminate presence information, subject to a wide variety of controls. It is build on top of IETF SIP/SIMPLE presence documents and 3GPP/3GPP2 IMS/MMD. The application level specifications for presence service include presence information semantics and guidelines for presence applications.

In the current embodiment two PoC users UE_{A} and UE_{B} access presence service provided by the presence server PS. OMA Push To Talk over Cellular (PoC) service is a two-way form of communications that allows users to engage in immediate communication with one or more users. PoC service is similar to a "walkie-talkie" application where a user presses a button to talk with an individual user or broadcast to a group of participants. PoC has already evolved though a series of versions: PoCv1.0 allowed communication using voice only, PoCv2.0 allows also video and text messaging.

Due to the great interest in the PoC services, individual vendors provided early adoptions of the emerging technology, primarily in the form of standalone PoC systems. Since then a group of interested organizations prepared an industry specification for PoC, with the aims of following existing 3^{rd} Generation Partnership Project (3GPP) IP Multimedia Subsystem (IMS) specifications. The standardization work to this direction has since then continued in Open Mobile Alliance (OMA) using the existing set of specifications as a starting point.

Establishment of connections in a PoC system is implemented using the mechanisms of a Session Initiation Protocol (SIP). The PoC server system may, as such, operate conventionally and is thus not shown or further discussed in Figure 2.

The embodied presence server PS 21 of Figure 2 is an entity that accepts, stores, and distributes presence information about PoC Clients UE_{A} and UE_{B}. In general, presence information may be used as status indicator to describe user's communication status and willingness to communicate. Presence information may also be used as communication media describing user's context and mood, or interests. Other users can see the presence of the originator and the presence can be changed either automatically or by the originator. The presence service model defines the presence information to consist of an arbitrary number of elements, called presence tuples. These presence tuples consist of a status marker that may convey information such as online/offline/busy/away/do not disturb, an optional communication address, and optional other presence markup.

The presence service has two distinct sets of clients. One set of clients, called presentities, provides presence information to be stored and distributed. The other set of clients, called watchers, receives presence information from the service. There are different kinds of watchers, called as fetchers and subscribers. A fetcher simply requests the current value of the presence information of a presentity from the presence server. A subscriber requests notification from the presence server of changes in some presentity's presence information. A special kind of fetcher is a poller that fetches information on a regular basis. The invention is applicable to all these type of watchers, even though in the present embodiment a subscription-based user is used as an example.

Accordingly, when a PoC client UE_{B} 24 of Figure 2 provides presence information (presence state) to the presence server 21, it is stored in what constitutes his personal record and can be made available for distribution to other users, for example the PoC client UE_{A} 23. According to IETF Presence Authorization Rules, the Session Initiation Protocol (SIP) for presence (SIMPLE) specifications allow a User UE_{A} 23, called a watcher, to subscribe to another user UE_{B} 24, called a presentity, in order to learn his or her presence information.

The requested subscription is handled by a presence agent. In the embodiment of Figure 2 the presence agent is implemented in the presence server PS 21. In order to process the subscription, the presence agent PS 21 must make a determination about whether the subscription is authorized. This authorization decision includes whether or not to accept the subscription, and also includes decisions about when the watcher should receive notifications, and when it does receive them, and what the content of those notifications should be.

Typically, the authorization decision is a combination of the authorization policies of the service provider, combined with the authorization policies of the presentity. In the present embodiment these authorization policies are combined into a ruleset document that is made accessible to the presence server. It is clear, however, that the authorization information may be integrated to or stored in the presence server itself, without deviating from the scope of protection. XML Document Management (XDM) is an OMA specification for accessing and manipulating XML documents stored in networked document repositories. The specification is based on the IETF XML Configuration Access Protocol (XCAP) and enables manipulation of individual XML elements and attributes instead of the whole XML document. The user's contact lists are stored on the shared XML document management (XDM) server in an application-independent format and can be shared also with other applications. In the embodiment of Figure 2, the PoC user-specific specific data structures are stored as a permission statement document stored in the XDM server 22.

The XML document comprises a sequence of rule elements in three parts - conditions, actions, and transformations. Each action or transformation, which is also called an attribute, has the property of being a positive grant of information to the watcher UE_{A}23. This mechanism is secure for privacy, since the lack of any action or transformation can only result in less information being presented to a watcher. An individual rule element contains a conditions element, an actions element, and a transformations element. The conditions element specifies under what conditions the rule is to be applied to a subscription request. The actions element tells the server what actions to take against the request. The transformations element indicates how the presence data is to be manipulated before being presented to the requesting watcher.

In the conventional case, the presentity UE_{B}24 defines a set of authorization rules for controlling access to his or her presence data and stores (2-10) these rules to XDMS 22. Throughout the procedures, the presentity may naturally also update the rules. When PS 21 receives (2-11) from watcher UE_{A} 23 a subscription for presence information of a particular presentity UE_{B}24, the SIP protocol used for implementing presence service provides the identity of the watcher UE_{A} 23. The identity of the watcher UE_{A} 23, together with other information provided by the using protocol or generally available to the server, is then used for searching through the rule set. PS 21 retrieves (2-12, 2-13) the UE_{B}24 rule set document from XDMS 22, checks the authorization of UE_{A} 23 to access presence information of UE_{B}24 on the basis of the combination of the rules in the ruleset. If the authorization is successful, the requested presence information is provided (2-14) to the watcher UE_{A} 23.

The conventional presence authorization rules allow only a rigid mode of operation where a specific watcher either can or cannot access the presence information provided by the presentity. Typically access to some information is a matter of privacy and none of the presentities want to share such information with anybody. For example, present location of the user is typically such information, also personal information like hobbies or musical preferences are not necessarily shared with any user of the system.

Accordingly, presently the principal of the presentity UE_{B}24 may specify access to full presence information to a class of users ('family') comprising the family members of UE_{B}, access to subset of information (for example, everything except location) to class 'friends' and no access to any of the presence information of UE_{B} to other users. It is, however, clear that there exists a variety of use cases where a more versatile approach to availability of the location information would be very valuable. For example, a user may wish to keep his location information private by default, but would like to share his location with any of his friend whenever both are located on the same place (for example in the same city or the same airport). This is not possible with any of the present authorization rule configurations.

In an embodiment of the invention this is made possible by conditioned authorization such that while processing a watcher's request for a specific part of the presence information of a presentity, the presence service derives from the authorization rules a matching condition, retrieves a characteristic corresponding to the matching condition using at least the presence information of the watcher, and allows access to the specific part of the presence information of the presentity only if the matching condition is met. Otherwise the specific part of presence information is not provided to the watcher.

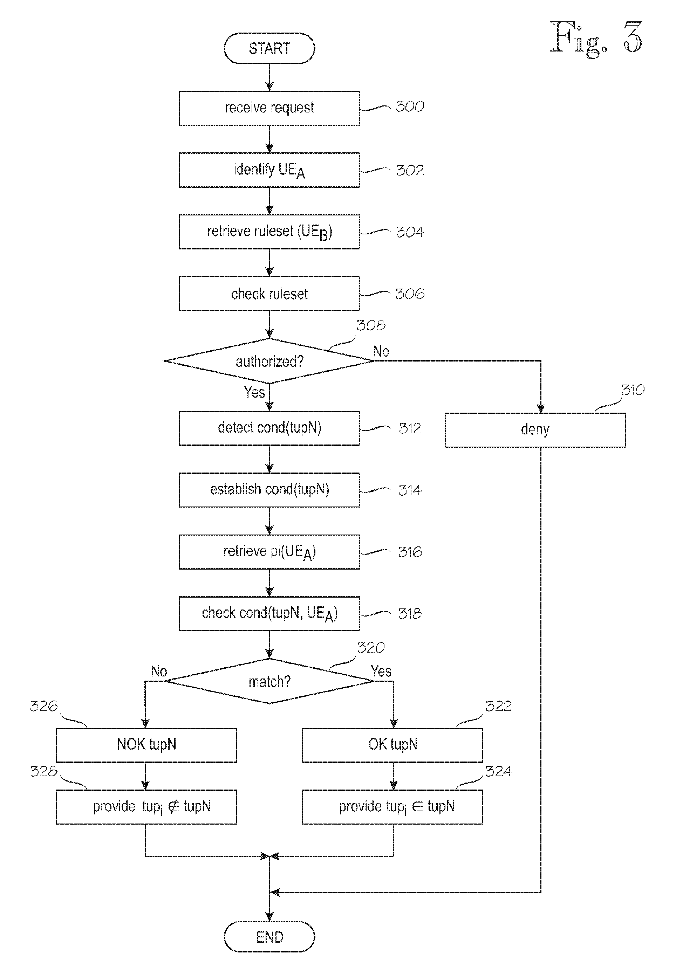

Figure 3 illustrates in more detail an exemplary procedure from the point of view of the presence server in the configuration embodied in Figure 2. Typically the presence information comprises various types of data elements, and information in these data elements are provided in form of attributes. The data elements may be specified by standardization agreements or they may operator specific.

The procedure begins at a stage where the presence server PS is in operation and standby for requests from watchers, and receives (step 300) from watcher UE_{A} a request for presence information of a presentity UE_{B}. The request may be, for example a request for subscription from a subscriber-based watcher, a timed request from a poller, or a single request from a fetcher. PS identifies (step 302) the requesting watcher UE_{A}, retrieves (step 304) from XDMS a ruleset corresponding to the presentity UE_{B} and using the identity of the watcher UE_{A}, checks (step 306) his or her authority to access presence data of the presentity UE_{B} on the basis of the combination of the rules in the ruleset. If (step 308) the authorization fails, PS denies (step 310) access to presentity UA_{B}'s presence information from the watcher UE_{A} and the procedure terminates. Failing could result, for example, from the fact that the watcher UE_{A} does not belong to either of the classes 'family' or 'friends'. Otherwise the procedure may continue to a stage where a condition associated with a defined data element tupN in the presence information is detected in the ruleset.

Let us assume that the presentity UE_{B} wishes to share his location information also with the group classified as friends in the case such friend is in the same location, for example in the same town or in the same airport. In other instances the presentity UE_{B} wishes to keep the location information private from friends. It should be noted that for simplicity the requested presence data element of the presentity is in the present example the same as the presence data element of the watcher. However, it is clear that the presence data element of the watcher referred to by the condition may also differ from the data element of the presentity without deviating from the scope of protection. For example, an enthusiastic chess player might wish to let other chess player friends know his location, but otherwise keep the location information private from friends.

In the present embodiment this is enabled by including in the ruleset a reference to a new XML namespace that comprises data elements accessible to PS, and in transformations part of the ruleset a reference to a data element in the namespace. This way the ruleset is adjusted to state that access to tuple tupN that comprises location information of the presentity UE_{B} is allowed only if the presence information of the watcher UE_{A} fulfils a defined matching criterion.

The combination of the information in these lines of the ruleset are in the present embodiment considered to form a condition COND(tupN) that controls availability of the defined information tupN. Accordingly, when PS detects (step 312) in the request a reference to COND(tupN), it retrieves (step 314) from the namespace defined in the ruleset one or more data items comprising information for establishing the condition COND(tupN).

The information required for establishing the condition may vary. It may comprise, for example, definitions to be used in structuring a matching criterion. Alternatively, it may comprise, a complete matching criterion to at least one attribute in the presence information of the watcher. Other types of information may be applied without deviating from the scope of protection.

Also location information may be expressed in many ways. In the IETF framework, The location may be indicated in form of a presence-based GEOPRIV Location Object Format such that location information corresponds, for example, to a group of coordinates:

```
 <gp:geopriv>
        <gp:location-info>
          <gml:location>
             <gml:Point gml:id="point1" srsName="epsg:4326">
                                          <gml:coordinates>37:46:30N
 122:25:10W</gml:coordinates>
             </gml:Point>
            </gml:location>
        </gp:location-info>
     </gp:geopriv>
```

or a character string of an address:

```
 <gp:geopriv>
        <gp:location-info>
          <cl:civicAddress>
             <cl:country>US</cl:country>
             <cl:A1>New York</cl:A1>
             <cl:A3>New York</cl:A3>
             <cl:A6>Broadway</cl:A6>
             <cl:HNO>123</cl:HNO>
             <cl:LOC>Suite 75</cl:LOC>
             <cl:PC>10027-0401</cl:PC>
          </cl:civicAddress>
        </gp:location-info>
     </gp:geopriv>
```

In the present example, the civicAddress-format is used, but it is clear that other formats may also be used without deviating from the scope of protection.

An exemplary ruleset with the proposed configuration is as follows:

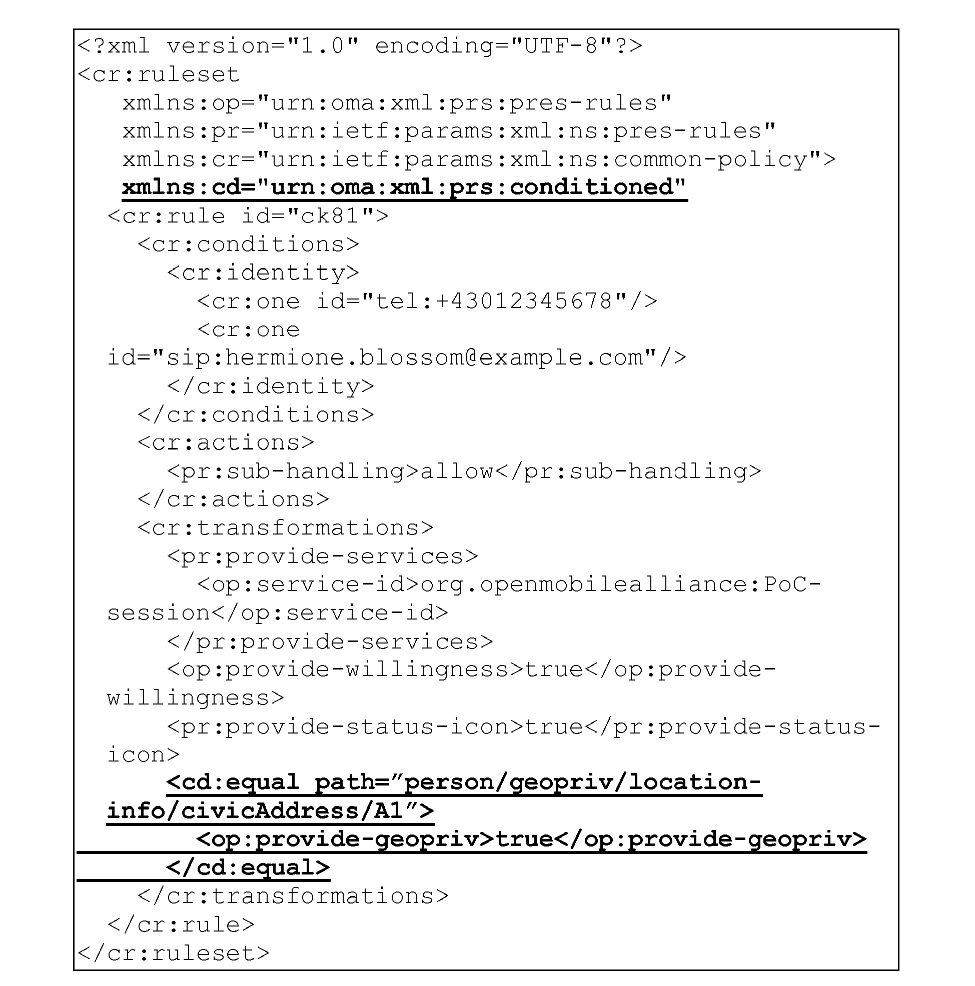

The line *xm*/*ns:cd="urn:oma:xm*/*:prs:conditioned"* proposes a new XML namespace that further extends the ruleset document defined in IETF Request for Comments -documents (RFC) on SIMPLE presence rules and preliminarily extended in OMA Presence SIMPLE specifications. The line *<cd:equal path="person*/*geopriv*/*location-info*/*civicAddress*/*A1"*/*>* in the transformations part formulates a matching criterion according to which location informations may be compared on the basis of the A1 element (here:city) of the civicAddress object. The line *<op:provide-geopriv>true<*/*op:provide-geopriv>* in the transformations part associates the condition with the provision of location data part of the presence information.

In order to be able to check the condition, PS also retrieves (step 316) information required to perform the check. The matching criteria in this embodiment stated that the location of the watcher and the location of the presentity UE_{B} need to be essentially the same. This means that PS retrieves location information of the presentity UE_{B} and of the watcher UE_{A}.

PS then checks (step 318) whether the condition COND(tupN) is met or not. In the present example, in order to establish the condition, the new name space comprises an element:
*<equal>* with node URI identifying an element/attribute that must have the same value for the condition to be met. This provides a matching criterion such that a condition based on similarity of objects in 'civicAddress' format may be established. In the present example, the check for matching comprises comparing the character strings in the city element of the location data of the watcher UE_{A} and of the presentity UE_{B}. In case the character strings match, the watcher UE_{A} and the presentity UE_{B} are considered to co-locate in the same area, and the match is positive. Otherwise a negative match is derived.

It is clear that in the same way an element:
*<range>* with an attribute identifying a maximum difference for two coordinates for the condition to be met
enables a matching criterion such that a condition on similarity of objects in 'location' format can be established by determining the difference between the coordinates of the watcher UE_{A} and of the presentity UE_{B}. This difference could be compared to the retrieved <range> value. In case the range is exceeded, the difference is too big and the locations are not interpreted to be the same. If the difference remains smaller than the range, the watcher UE_{A} and the presentity UE_{B} are considered to co-locate in the same area, and the match is positive.

If the match is positive (step 320), PS deems (step 322) the condition associated to tupN to be met and includes (step 324) tupN carrying location information of the presentity UE_{B} to the presence information tupᵢ to be provided to the watcher UE_{A}.

If the match is negative (step 320), PS deems (step 326) the rule associated to tupN not to have been met and does not include (step 328) tupN carrying location information of the presentity UE_{B} from the presence information tupᵢ to be provided to the watcher UE_{A}.

It is clear that other types of presence information for performing the conditional access may be applied without deviating from the scope of protection. For example, the presentity interested in chess may define that only friends whose presence information also comprises data item 'CHESS' for hobby are allowed to be informed on this part of the presence information. In addition, even though providing for some of the most significant applications of conditional access, the matching criteria does not necessarily need to require similarity between the presence information of the watcher and the information of the presentity or provided by the presentity. Negative or exclusive definitions may be used, depending on the application. For example, continuing the above example, a presentity on a personal holiday in a city may wish not to be disturbed by his colleagues belonging to the 'friends' class, even if for the time residing in the same city. On the other hand, he does not mind the other friends knowing that he is in that particular city. In such case the condition would be to provide a positive match in case the location of the watcher is different from the location of the presentity.

Figure 4 illustrates an exemplary hardware configuration for the implementation of an embodied device, for example applicable as the presence server of Figure 2. The device comprises a control unit 41, an element that comprises an arithmetic logic module; a number of special registers and control circuits. Connected to the processing unit is a memory unit 42, a data medium where computer-readable data or programs or user data can be stored. The memory means typically comprise memory modules that allow both reading and writing (RAM), and memory modules whose contents can only be read (ROM). The unit also comprises an interface block 43 with input unit 44 for inputting data for internal processing in the element, and output unit 45 for outputting data from the internal processes of the element.

Examples of said input unit 44 comprise plug-in units acting as a gateway for information delivered to its external connection points. For receiving information from the operator, the input unit 44 may also comprise a keypad, or a touch screen, a microphone, or the like. Examples of said output unit 45 include plug-in unit feeding information to the lines connected to its external connection points. For outputting information to the operator, the output unit 45 may also comprise a screen, a touch screen, a loudspeaker, or the like.

The control unit 41, memory unit 42, and interface block 43 are electrically interconnected to perform systematic execution of operations on received and/or stored data according to predefined, essentially programmed processes of the element. In solutions according to the embodiments of the invention, these operations comprise functions for implementing the logical units, operations and interfaces of the presence server element, as described above. The various embodiments of the invention may be implemented as a combination of computer programs and the respective units disclosed above.

The computer programs may be stored on a computer program distribution medium readable by a computer or a processor. The computer program medium may be, for example but not limited to, an electric, magnetic, optical, infrared or semiconductor system, device or transmission medium. The computer program medium may include at least one of the following media: a computer readable medium, a program storage medium, a record medium, a computer readable memory, a random access memory, an erasable programmable read-only memory, a computer readable software distribution package, a computer readable signal, a computer readable telecommunications signal, computer readable printed matter, and/or a computer readable compressed software package.

It will be obvious to a person skilled in the art that, as the technology advances, the inventive concept can be implemented in various ways. The invention and its embodiments are not limited to the examples described above but may vary within the scope of the claims.

## Claims

1. A method, comprising:
operating a communication system;
storing presence information of users of the communication system, presence information comprising one or more separate data elements;
associating to a data element of a user of the communication system a condition such that availability of information in the data element of the user to another user of the communication system depends on the condition, and the condition is based on information in a data element of the other user;
making the data element of the user available to the other user in response to the information in the data element of the other user meeting the condition.

2. A communication system, comprising
a first network node (21) for storing presence information of users of the communication system, presence information comprising one or more separate data elements;
the first network node (21) being configured to establish a condition for a data element of a user of the communication system such that:
availability of information in the data element of the user to another user of the communication system depends on the condition,
the condition is based on information in a data element of the other user, and
the data element of the user is available to the other user in response to the information in the data element of the other user meeting the condition.

3. The communication system according to claim 2, **characterized by** a second network node (22) operatively connected to the first network node and configured to store the condition;
the first network node being configured to retrieve from the second network node the condition in response to detecting a request for the information in the data element of the user.

4. The communication system according to claim 2 or 3, **characterized by** the condition being met when the information in the data element of the other user matches with a predefined information item.

5. The communication system according to claim 4, **characterized by** the predefined information item being the information in the data element of the user.

6. The communication system according to claim 5, **characterized in that** the information in the data elements of the user and of the other user comprise an attribute for the data element, and the condition is met when the attribute of the other user is identical with, or is substantially similar to the attribute of the user.

7. The communication system according to claim 6, **characterized in that** the condition comprises a definition for similarity between attributes.

8. A network node for a communication system, comprising
a memory (42) configured to store presence information of users of the communication system, presence information comprising one or more separate data elements;
an interface unit (43) configured to receive a request for information in a data element of a user;
a control unit (41) operatively connected with the memory and the interface unit and configured to operate the network node to:
detect the request being associated with a condition such that availability of information in the data element of the user to another user of the communication system depends on the condition, and the condition is based on information in a data element of the other user, and
establish the condition;
retrieve the information in the data element of the other user;
check if the information in the data element of the other user meets the condition;
provide the information in the data element of the user in response to the information in the data element of the other user meeting the condition.

9. The network node according to claim 8, **characterized by**
the interface unit (43) configured to connect the network node to another network node;
the control unit (41) being configured to operate the network node to:
in response to detecting the request being associated with a condition, retrieve from the second network node information for establishing the condition.

10. The network node according to claim 8 or 9, **characterized by** the condition being met in response to the information in the data element of the other user matching with a predefined information item.

11. The network node according to claim 10, **characterized by** the predefined information item being the information in the data element of the user.

12. The network node according to claim 11, **characterized**
**in that** the information in the data elements of the user and of the other user comprise an attribute for the data element, and the condition is met when the attribute of the other user is identical with, or is substantially similar to the attribute of the user.

13. The network node according to claim 12, **characterized**
**in that** the condition comprises a definition for similarity between attributes.

14. A method, comprising:
operating a network node of a communication system;
storing presence information of users of the communication system, presence information comprising one or more separate data elements;
receiving (300) a request for information in a data element of a user;
detecting (312) the request being associated with a condition such that availability of information in the data element of the user to another user of the communication system depends on the condition, and the condition is based on information in a data element of the other user, and
establishing (314) the condition;
retrieving (316) the information in the data element of the other user;
checking (318) if the information in the data element of the other user meets the condition;
providing (324) the information in the data element of the user in response to the information in the data element of the other user meeting the condition.

15. A computer program product readable by a computer and encoding a computer program of instructions for executing a computer process for controlling functions in a network node of a communication system, **characterized by** the process including:
operating a network node of a communication system;
storing presence information of users of the communication system, presence information comprising one or more separate data elements;
receiving a request for information in a data element of a user;
detecting the request being associated with a condition such that availability of information in the data element of the user to another user of the communication system depends on the condition, and the condition is based on information in a data element of the other user, and
establishing the condition;
retrieving the information in the data element of the other user;
checking if the information in the data element of the other user meets the condition;
providing the information in the data element of the user in response to the information in the data element of the other user meeting the condition.
